# EUROPÄISCHE PATENTSCHRIFT

(11) **EP 0 690 622 B1**
(45) Veröffentlichungstag und Bekanntmachung des Hinweises auf die Patenterteilung: **27.02.2002**
(21) Anmeldenummer: 95110080.9
(22) Anmeldetag: 28.06.1995
(51) Int. Cl.: H04N 7/087, H04N 7/088, G09G 5/24

(54) **Verfahren und Vorrichtung zur proportionalen Anzeige von Teletextdaten**
Method and apparatus for proportionally displaying of teletext data
Procédé et dispositif d'affichage proportionnel des données de télétexte

(30) Priorität: 02.07.1994 DE 4423232
(43) Veröffentlichungstag der Anmeldung: 03.01.1996
(73) Patentinhaber: DEUTSCHE THOMSON-BRANDT GMBH, 78048 Villingen-Schwenningen (DE)
(72) Erfinder: Gyarmati, Sandor, D-78052 Villingen-Schwenningen (DE); Lachenmaier, Reinhard, D-78647 Trossingen (DE)

(56) Entgegenhaltungen:
- EP-A- 0 190 837
- EP-A- 0 488 400
- FR-A- 2 669 451
- GB-A- 2 274 956
- PATENT ABSTRACTS OF JAPAN vol. 017, no. 363 (P-1570), 8 July 1993 & JP 05 053546 A (TOSHIBA CORP), 5 March 1993,
- PATENT ABSTRACTS OF JAPAN vol. 018, no. 105 (E-1512), 21 February 1994 & JP 05 304641 A (VICTOR CO OF JAPAN LTD), 16 November 1993, & US 5 467 142 A (ICHINOKAWA) 14 November 1995
- PATENT ABSTRACTS OF JAPAN vol. 017, no. 076 (P-1487), 16 February 1993 & JP 04 278993 A (BROTHER IND LTD), 5 October 1992,
- PATENT ABSTRACTS OF JAPAN vol. 010, no. 278 (P-499), 20 September 1986 & JP 61 098439 A (RICOH CO LTD), 16 May 1986,

## Beschreibung

Die Erfindung geht aus von einem Verfahren zur Anzeige von Zeichen auf dem Bildschirm eines Fernsehgerätes gemäß dem Oberbegriff des Anspruchs 1.

Teletext beinhaltet Informationen über Sport, Politik, Wetter, Nachrichten, Filmprogrammübersichten und vieles mehr. Diese Daten werden von verschiedenen Sendeanstalten angeboten und können mit einem Dekoder entschlüsselt und auf einem Fernsehgerät seitenweise angezeigt werden. Die Daten werden von den Sendeanstalten seriell, das heißt Seite für Seite übertragen. Wählt nun der Benutzer mit der Fernbedienung seines Fernsehers eine Seite an, dann wartet der Dekoder darauf, daß er diese Seite empfangen kann. Nach Empfang der Daten dieser Seite wird sie dem Benutzer auf dem Bildschirm angezeigt. Ist die eingetragene Seite nicht vorhanden, wird dieses dem Benutzer angezeigt. Durch die Vielzahl der Seiten kommt es vor, daß der Benutzer auf die angewählte Seite recht lange warten muß. Um diese Zeit zu reduzieren, ist es bekannt, einen großen Speicher vorzusehen, in dem die übertragenen Teletextdaten abgespeichert werden, so daß ein schneller Zugriff erfolgen kann.

Ein Teletextsystem ist in JP 05 053546 A offenbart. Mit Hilfe einer Anzeigekontrolleinheit wird hierbei eine easy-to-see Reduzierung der Anzeige vorgenommen, ohne daß ein Informationsverlust erfolgt oder die Speicherkapazität erhöht werden muß.

In JP 61 098439 A ist ein Drucker offenbart, bei dem die Speicherkapazität ohne Verringerung der Druckgeschwindigkeit reduziert werden kann, indem während einer Resychronisationsphase die zu druckenden Daten periodisch an einen Ausgangspufferspeicher transferiert werden. Hierbei ist ein Zähler für die Druckpunkte vorgesehen, der sicherstellt, daß beim Erreichen der Druckpunktzahl eines Zeichens die nächsten Daten ausgegeben werden, wobei ein Zeichenzähler erhöht wird.

Die EP-A-0 190 837 beschreibt eine Teletexteinheit, bei der eine Prioritätenliste der am häufigsten abgefragten Seiten erzeugt wird. Diese häufigsten Seiten werden in einem Speicher abgelegt, um so einen schnellen Zugriff zu ermöglichen.

Der Erfindung liegt die Aufgabe zugrunde, ein Verfahren und eine Vorrichtung zu schaffen, mit denen es möglich ist, Zeichen, die insbesondere Teletextdaten entsprechen Proportionalschrift darzustellen. Diese Aufgabe wird durch die in den Ansprüchen 1 und 6 angegebenen Merkmale der Erfindung gelöst. Vorteilhafte Weiterbildungen der Erfindung sind in den Unteransprüchen angegeben.

Die Zeichengeneratoren, die z.B. in den heute gebräuchlichen Videotextprozessoren Verwendung finden, arbeiten nach einer taktkonstanten Logik, d.h. die Eintragungen im SPEICHER (RAM) werden mit einem festen Takt ausgelesen und dargestellt. Durch diese konstante Zeit bedingt, steht zur Darstellung eines Zeichens auf dem Bildschirm immer ein gleichgroßer Raum zur Verfügung. Hieraus resultiert eine nichtproportionale Darstellung der Zeichen.

Wenn jetzt die Zeichen proportional, d.h. entsprechend ihrer grafischen Breite (*m* ist breiter als *i* ), dargestellt werden sollen, erfordert dies eine geänderte Darstellungslogik.

Erfindungsgemäß wird in der Schaltung ein Zähler eingesetzt. Er hat die Aufgabe, entsprechend der Breite der Buchstaben den Zeitpunkt für den Speicherzugriff auf das nächste Zeichen zu bestimmen. Dafür benötigt er ein Längensignal *(Width),* das die Anzahl der Pixel pro Linie des Buchstabens angibt, und ein Taktsignal (*Clock*), mit dem die Pixel aus dem Ausgaberegister geschoben werden.

Wurden nun die im Längensignal *(Width)* angegebenen Anzahl Pixel ausgegeben, gibt der Zähler an die speicherverwaltende Processeinheit das Signal für das einlesen des nächsten Zeichens (*next char)* weiter und diese veranlaßt, den nächsten Zugriff auf den Speicher (RAM) zu tätigen. Durch das Initialisieren des Zählers (Counter) ist nun eine Möglichkeit geschaffen, Buchstaben proportional darzustellen; denn durch die verschiedenen Werte der Längensignale *(Width)* (z.B. *Width(i) =* 5, *Width (m)* = 16) wird das Signal nächstes Zeichen (*next char)* , in dem die Zugriffe auf den Speicher (RAM) ausgeführt werden, aperiodisch und somit die Breite der Buchstaben voneinander verschieden.

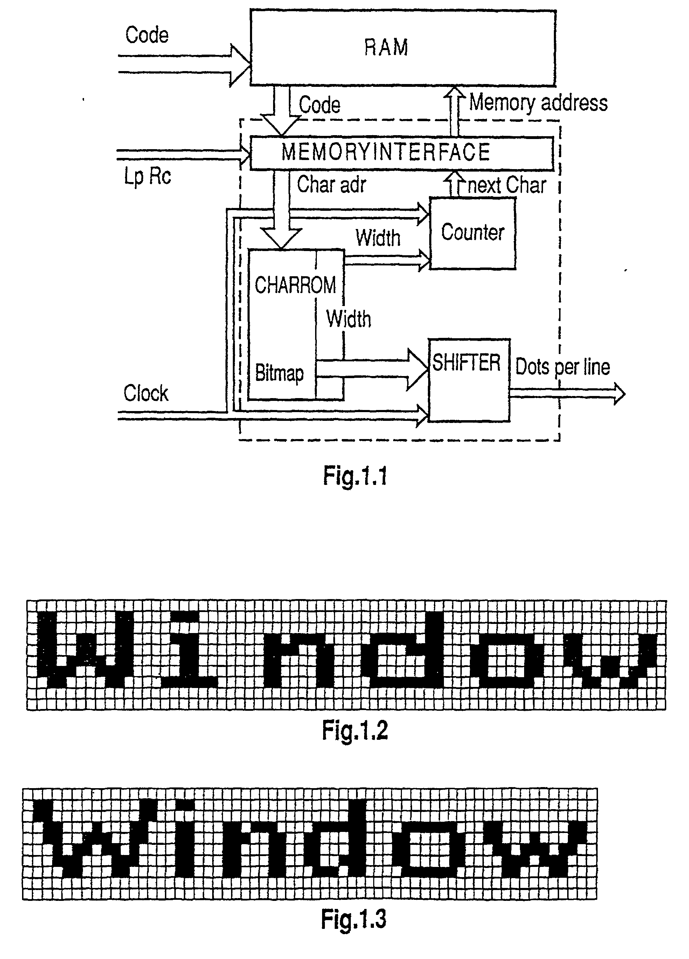

- Fig. 1: stellt ein Anwendungsbeispiel der Weiterbildung dar.
- Fig 1.1: zeigt: Speicher RAM, in dem der Code der darzustellenden Zeichen gespeichert wird;

- Zeichenspeicher CHARROM, in dem die *Bitmap* und zusätzlich noch die Länge *Width* des Zeichens Characters abgelegt sind;
- Speicherinterface MEMORYINTERFACE, das die Ausgabe aus dem RAM steuert, und mit Hilfe des *Codes* und des Zählers linien pro Reihe LpRc, der angibt, welche Linie der Zeichenmatrix gerade ausgelesen wird, die Zeichenadresse *Char adr* ermittelt;
- Zähler COUNTER;
- Ausgabeschieberegister SHIFTER, zur parallel-seriell-Umwandlung;
- Taktsignal CLOCK, welches die Bitfrequenz vorgibt (z.B. 12 MHz bei heutigem 4:3 Format).

Beim Einlesen der Daten wird der Text direkt in den Speicher RAM geschrieben. Zum Zeitpunkt der Darstellung eines Zeichens (resp. des Bildschirmaufbaus im Hintergrund bei Pixelspeicher) wird der Zähler COUNTER mit der Länge *Width* initialisiert, die er entsprechend dem *Code* aus der Tabelle im Zeichenspeicher CHARROM holt; die *Bitmap* wird in das Ausgaberegister SHIFTER geladen. Der Zähler COUNTER zählt die Taktimpulse CLOCK, der die Ausgabe der Dots aus dem Schieberegister SHIFTER steuert, und gibt bei Erreichen des Läüngenwertes Width den Impuls nächstes Zeichen *next char* an das Speicherinterface MEMORYINTERFACE, um im Speicher RAM das nächste Zeichen auszulesen.
- Fig. 1.2: stellt einen Schriftzug mit konstanten Abstand dar.
- Fig. 1.3: stelle einen Schriftzug in Proportionalschrift dar.

Bei einer Weiterbildung der Erfindung erfolgt eine Datenkompression beim Abspeichern von Textdaten. Typisch für den Inhalt von Teletextseiten in der Ausbaustufe 1 (Level 1) sind das Wiederholen eines Zeichens und die ungleiche Verteilung der Buchstaben. Beim Speichern einer solchen Seite wäre es von Vorteil, solche Eigenschaften zur Datenkomprimierung nutzen zu können. Die zwei aufgeführten Methoden ermöglichen dies.

### Methode 1) Wiederholung

Bei der Wiederholung von ein und demselben Buchstaben reicht es völlig aus, einmal den Buchstaben und dazu die Anzahl der Wiederholungen zu speichern. Als Sequenzkennung eignet sich 80h, da dieser Code weder übertragen wird, noch kann er durch nachstehendes Verfahren erzeugt werden (00h wird in Level 1 auch nicht übertragen).

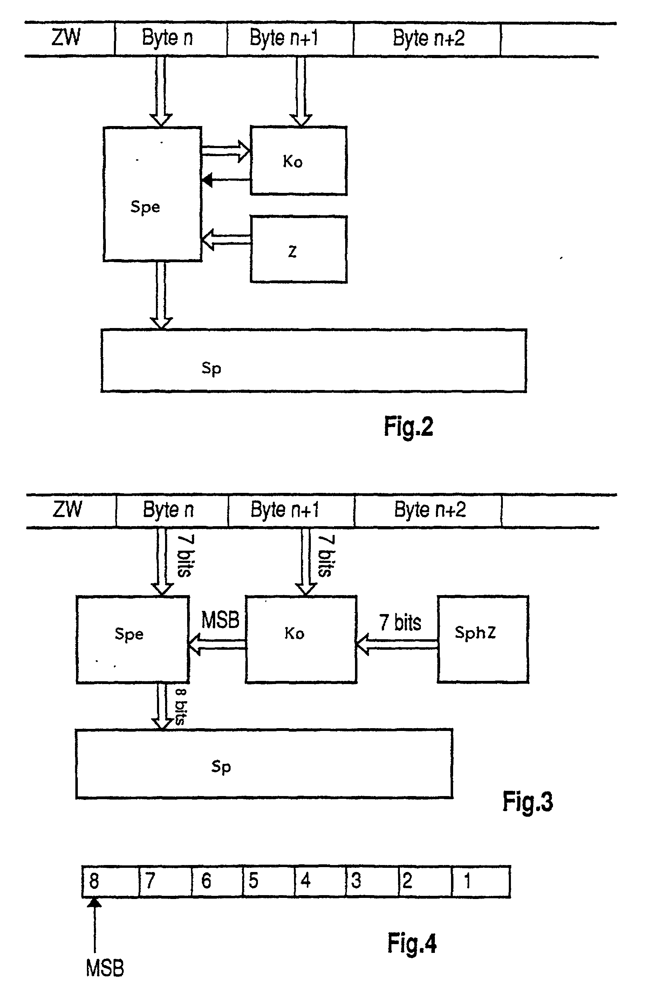

Im folgenden wird die Methode 1) anhand eines Beispiels (Fig.2) erläutert.

Folgende Sequenz kennzeichnet eine Zeichenwiederholung:

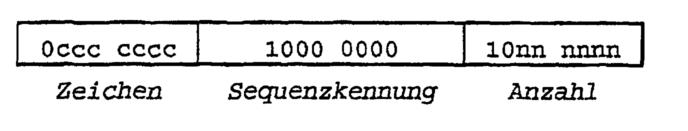

Die Erzeugung dieses Codes erfolgt per Hardware:

Bekommt der Komparator von der Speicherschnittstelle Spe und von der nachfolgenden Adresse des Zwischenspeichers ZW denselben Wert, startet er den Zähler Z und stoppt die Übertragung zum Speicher Sp. Stattdessen gibt die Speicherschnittstelle Spe den Wert 80h aus. Endet die Wiederholung, d.h. die nachfolgende Bufferadresse beinhaltet einen anderen Wert, stoppt der Komparator Ko den Zähler Z, und dieser gibt seinen Wert an die Speicherschnittstelle Spe zum Abspeichern. Auf diese Weise ist es möglich, durch Abspeichern der Häufigkeit eines Zeichens Speicherplatz zu sparen.

### Methode 2) Häufigkeit

Die statistische Verteilung der Häufigkeit des Auftretens von verschiedenen Buchstaben in laufenden Texten ist sehr unterschiedlich. Zu beobachten ist allerdings, daß jede Sprache ihren bevorzugten Buchstaben hat (so z.B. ist im Deutschen das 'e' am häufigsten). Dies kann sogar von Zeile zu Zeile unterschiedlich sein, da auch im Blockmosaikbereich solch eine Häufung vorkommen kann. Weiterhin nimmt das Leerzeichen (Blank) in dieser Betrachtung eine Sonderstellung ein, denn als Trennung zwischen den Worten kommt es am häufigsten in Texten vor (besonders in Sprachen, die das im deutschen übliche Zusammensetzen von Wörtern nicht kennen).

Das Paritybit kann nach seiner Auswertung dazu verwendet werden, das Auftreten eines solchen "häufigen Buchstaben" zu kennzeichnen.

Folgendes wird zur Regel:
Wenn der als häufigster erkannte Buchstabe auftritt, wird das MSB Bit (das 8. Bit) des vorhergehenden (oder des nachfolgenden) Buchstaben gesetzt. Dadurch muß das Zeichen selbst nicht abgespeichert werden. Allerdings kann bei direkter Wiederholung nur jedes zweite Zeichen eliminiert werden.

Im folgenden wird die Methode 2) anhand eines Beispiels (Fig.5) erläutert.

Fig. 3 zeigt die Speicherschnittstelle Spe, den Komparator Ko, den Speicher Sp für das häufigste Zeichen SphZ und den Zwischenspeicher ZW mit den vorhergehenden Byte. Wird im Zwischenspeicher ZW vom Komparator erkannt, daß ein Buchstabe häufiger auftritt, wird dieser Buchstabe in dem Speicher Sp als häufigstes Zeichen SphZ abgespeichert und das MSB Bit mitgesetzt.

Auf diese Weise ist es möglich, Proportionalschriften zu ermöglichen, um Speicherplatz zu sparen.

### a) Algorithmus mit variablem Zeichen

Zuerst wird die Zeile auf den häufigsten Buchstaben hin untersucht. Der Buchstabe, bei dem das MSB zum erstenmal gesetzt ist, ist als jener markiert, der beim weiteren Auftreten des MSB's eingesetzt werden soll.

### Folgende Zeichenkette

[Blank] d e r [Blank] S e e
wird so codiert: ('e' als häufigster Buchstabe festgestellt) 20 44 **E5** 72 20 **D3** 65
(das **E5**h signalisiert, daß das 'e' (**65**b) bei jedem kommenden Auftreten des gesetzten MSB eingefügt werden soll. So ist das nächste 'e' durch das MSB beim 'S' (**53**h → **D3**h) erzeugt worden. Das zweite 'e' von 'See' kann nicht eliminiert werden)

### b) Algorithmus mit determiniertem Zeichen

Es wird ein Buchstabe für eine Sprache (d.h. für einen kompletten Zyklus) oder für alle Sprachen des Decoders determiniert, daß er der Häufigste wäre (z.B.: 'e', 'n' oder auch Blank), d.h. die Untersuchung und die Kennzeichnung beim ersten Auftreten entfallen. Alles weitere gilt wie bei a),
Die Zeichenkette
[Blank] d e r [Blank] S e e
wird so codiert: ('e' als häufigster Buchstabe determiniert)
20 **C4** 72 20 **D3** 65
(die MSB von **C4**h und **D3**h signalisieren, daß jeweils nachfolgend ein 'e' eingesetzt werden muß. Das zweite 'e' von 'See' kann auch hier nicht eliminiert werden)

Der Code 80h, der bei der Wiederholungsmethode als Sequenzkennung benutzt wird, kann bei normgerechter Übertragung (nach WST Level 1 darf der Code 00h nicht verwendet werden) nicht durch Setzen des MSB erzeugt werden. Durch diese Eindeutigkeit der beiden Methoden ist es möglich, sie zu kombinieren.
d = 44 hex
de = C4 hex = 44 hex + BSB bit

Fig. 4 zeigt acht Bit, wobei sieben Bits zum Speichern vom Datum vorgesehen sind und das achte Bit, das MSB Bit zur Kennzeichnung des häufigsten Buchstabens verwendet wird.

## Patentansprüche

1. Verfahren zur Anzeige von Zeichen auf dem Bildschirm eines Fernsehgerätes, wobei die Zeichen Daten entsprechen, die von Fernseh-Sendeanstalten übertragen worden sind und nach der Übertragung in dem Fernsehgerät zwischengespeichert werden, **dadurch gekennzeichnet, daß** den Zeichen Längensignale (Width), welche die jeweilige grafische Breite eines Zeichens angeben, und Bitmapsignale (Bitmap) zugeordnet sind und eine proportionale Anzeige der Zeichen durch eine Ausgabe der Bitmapsignale (Bitmap) unter Verwendung eines Zählers, der zur Auswertung der Längensignale (Width) vorgesehen ist, erfolgt.

2. Verfahren nach Anspruch 1, **dadurch gekennzeichnet, daß** für verschiedene Zeichen jeweils ein Längensignal (Width) und ein Bitmapsignal (Bitmap) abgespeichert ist.

3. Verfahren nach Anspruch 1 oder 2, **dadurch gekennzeichnet, daß** bei der Ausgabe der Bildpunkte des Bitmapsignals (Bitmap) Taktimpulse (Clock) gezählt werden, wobei bei Erreichen des Längensignals (Width) das nächste Zeichen ausgelesen wird.

4. Verfahren nach einem der vorhergehenden Ansprüche, **dadurch gekennzeichnet, daß** bei der Wiederholung von gleichen Zeichen das Zeichen einmalig und die Anzahl der Wiederholung abgespeichert wird.

5. Verfahren nach einem der vorhergehenden Ansprüche, **dadurch gekennzeichnet, daß** ein Zeichen, welches am häufigsten auftritt, durch ein Bit MSB im vorhergehenden oder nachfolgenden Byte **gekennzeichnet** wird.

6. Vorrichtung zur Anzeige von Zeichen auf dem Bildschirm eines Fernsehgerätes, wobei die Zeichen Daten entsprechen, die von Fernsehsendeanstalten übertragen worden sind, mit einem Decoder zum Dekodieren der empfangenen Daten und einem Speicher zur Zwischenspeicherung der empfangenen Daten, **gekennzeichnet durch** einen Zeichenspeicher (CHARROM), in dem Längensignale (Width), welche die jeweilige grafische Breite eines Zeichens angeben, und Bitmapsignale (Bitmap) für die verschiedenen Zeichen abgelegt sind, und einen Zähler (Counter), dem für die proportionale Anzeige eines Zeichens ein Längensignal (Width) und ein Taktsignal (Clock) zugeführt wird, und der ein Signal für das Auslesen des nächsten Zeichens (next Char) ausgibt.

## Claims

1. Method for indicating characters on the picture screen of a television set, wherein the characters correspond to data which have been transmitted by television transmitting companies and are buffered within the television set after transmission,
**characterized in that**
length signals (width) indicating the respective graphic breadth of a character and bit map signals (bitmap) are allocated to the characters and a proportional indication of the characters is performed by issuing the bit map signals (bitmap) by employing a counter provided for evaluating said length signals (width).

2. Method according to claim 1, **characterized in that** a length signal (width) and a bit map signal (bitmap) are stored in each case for different characters.

3. Method according to claim 1 or 2, **characterized in that** during the issue of the picture points of the bit map signal (bitmap) clock pulses (clock) are counted wherein at reaching the length signal (width) the next character is read out.

4. Method according to anyone of the preceding claims, **characterized in that** with repitition of equal characters there are stored the character once and furthermore the number of repititions.

5. Method according to anyone of the preceding claims, **characterized in that** a character appearing most frequently is marked by a bit MSB within the preceding or the succeeding byte.

6. Method for indicating characters on the picture screen of a television set wherein the characters correspond to data which have been transmitted by television transmitting companies, including a decoder for decoding the received data and a memory for buffering the received data,
**characterized by** a latch (CHARROM) wherein length signals (width) indicating the respective graphic length of a character and bit map signals (bitmap) for the different characters are stored, and further including a counter (counter) fed by a length signal (width) and a clock signal (clock) for the proportional indication of a character and issuing a signal for reading out the next character (next Char).

## Revendications

1. Procédé d'affichage de caractères sur l'écran d'un téléviseur, où les caractères correspondent à des données qui ont été transmises par des installations émettrices de télévision et sont placées en mémoire temporaire dans le téléviseur après la transmission, **caractérisé en ce que** des signaux longitudinaux (width) qui indiquent la largeur graphique d'un caractère et des signaux bitmap (bitmap) sont associés aux caractères et un affichage proportionnel des caractères est effectué par une sortie des signaux bitmap (bitmap) en utilisant un compteur prévu pour évaluer les signaux longitudinaux (width).

2. Procédé conforme à la revendication 1, **caractérisé en ce qu**'un signal longitudinal (width) et un signal bitmap (bitmap) sont mémorisés pour des caractères différents.

3. Procédé conforme à la revendication 1 ou 2, **caractérisé en ce que** des impulsions de synchronisation (dock) sont décomptées lors de la sortie des points d'image du signal bitmap (bitmap), le caractère suivant étant lu lorsque le signal longitudinal (width) est atteint.

4. Procédé conforme à l'une des revendications précédentes, **caractérisé en ce que** lors de la répétition de caractères identiques, le caractère est mémorisé une fois et le nombre de répétitions est également mémorisé.

5. Procédé conforme à l'une des revendications précédentes, **caractérisé en ce qu**'un caractère qui apparaît le plus fréquemment est désigné par un bit MSB dans l'octet précédent ou suivant.

6. Dispositif d'affichage de caractères sur l'écran d'un téléviseur, où les caractères correspondent à des données qui ont été transmises par des installations émettrices de télévision, avec un décodeur pour le décodage des données reçues et une mémoire pour le placement en mémoire temporaire des données reçues, **caractérisé par** une mémoire temporaire (CHARROM) dans laquelle des signaux longitudinaux (width) qui indiquent la largeur graphique d'un caractère et des signaux bitmap (bitmap) sont associés aux différents caractères et par un compteur (counter) auquel sont acheminés un signal longitudinal (width) et un signal de synchronisation (dock) pour l'affichage proportionnel d'un caractère, lequel produit un signal pour la lecture du caractère suivant (next char).
